(19) Europäisches Patentamt
European Patent Office
Office européen des brevets

(11) **EP 0 928 554 B1**

(12) **EUROPÄISCHE PATENTSCHRIFT**

(45) Veröffentlichungstag und Bekanntmachung des Hinweises auf die Patenterteilung:
**05.03.2003 Patentblatt 2003/10**

(51) Int Cl.[7]: **A01D 41/12**

(21) Anmeldenummer: **98122426.4**

(22) Anmeldetag: **26.11.1998**

(54) **System zur Einstellung einer selbstfahrenden Erntemaschine**

System for regulation of a self-propelled harvesting machine

Système de régulation d'une moissonneuse automotrice

(84) Benannte Vertragsstaaten:
**BE DE DK FR GB IT**

(30) Priorität: **07.01.1998 DE 19800238**

(43) Veröffentlichungstag der Anmeldung:
**14.07.1999 Patentblatt 1999/28**

(73) Patentinhaber: **CLAAS Selbstfahrende Erntemaschinen GmbH 33428 Harsewinkel (DE)**

(72) Erfinder: **Diekhans, Norbert Dr. 33335 Gütersloh (DE)**

(56) Entgegenhaltungen:
**EP-A- 0 586 999      US-A- 4 337 611
US-A- 4 527 241      US-A- 5 712 782**

**Beschreibung**

Die Erfindung bezieht sich auf ein System zur Einstellung einer selbstfahrenden Erntemaschine, beispielsweise ein Mähdrescher. Eine derartige Erntemaschine ist sehr komplex und weist eine Vielzahl von Maschinenkomponenten mit entsprechenden vom Bediener/Fahrer einstellbaren Parametern auf. Diese Maschinenparameter sind bei einem Mähdrescher zum Beispiel die Dreschtrommeldrehzahl, die Gebläsedrehzahl, die Siebweiten von Unter- und Obersieb, die Haspeldrehzahl, die Fahrgeschwindigkeit etc.

Der Bediener/Fahrer der Erntemaschine muß die Parameter der Maschinenkomponenten richtig einstellen, um den Ernteeinsatz wie geplant optimal durchzuführen. Für einen optimalen Ernteeinsatz gibt es unterschiedliche Zielvorgaben. Dabei besteht eine Zielvorgabe für den Ernteeinsatz darin, möglichst geringe Verluste zu haben. Andererseits besteht angesichts des hohen Zeitdruckes während der kurzen Ernteperiode eine weitere Zielvorgabe darin, einen hohen Durchsatz beziehungsweise eine hohe Flächenleistung zu erreichen und so in möglichst kurzer Zeit zu ernten. Allerdings sind die einzelnen Zielvorgaben nicht unabhängig voneinander. So besteht beispielsweise zwischen dem Durchsatz und dem Verlust ein Zusammenhang. Mit zunehmendem Durchsatz nehmen im allgemeinen auch die Verluste zu. So besteht die Zielvorgabe meistens in einem Kompromiß zwischen geringen Verlusten und einer schnellen Erledigung des Ernteeinsatz.

Nun kommt für die Einstellung einer selbstfahrenden Erntemaschine für den Bediener/Fahrer erschwerend hinzu, daß von Ernteeinsatz zu Ernteeinsatz jeweils unterschiedliche äußere Erntebedingungen vorliegen, die unterschiedliche Einstellungen der Parameter der Maschinenkomponenten erfordern. So ist es zum einen möglich, mit einer Erntemaschine unterschiedliches Erntegut/Fruchtarten (Weizen, Roggen, Hafer, Mais etc.) zu ernten. Weitere äußere Erntebedingungen sind zum Beispiel der Reifezustand des Erntegutes, die Kornfeuchte, der Strohanteil, die Strohfeuchte, die Korngröße, Bestandsdichte (Ertrag) etc.

Erfahrenen Bedienern/Fahren, die den Einfluß der äußeren Erntebedingungen auf die Einstellung der Maschinenparametern kennen, gelingt dabei meistens eine optimale Einstellung. Für unerfahrene Fahrer jedoch ist es relativ schwierig, die vielen Maschinenparameter optimal einzustellen. Aber auch erfahrene Bediener/Fahrer haben zu Beginn der Erntesaison bei den ersten Ernteeinsätzen Probleme, die Erntemaschine optimal einzustellen.

In der EP 0 586 999 A2 wird ein System zur Einstellung einer Erntemaschine vorgeschlagen, das auf einem neuronalen Netzwerk basiert. Hierbei werden die äußeren Erntebedingungen über Sensoren erfaßt und den Eingangsneuronen der Eingangsschicht als Signale zugeführt. Das neuronale Netz mit seinen verborgenen Schichten, die mit ihren Neuronen der Informationsverarbeitung dienen, ist dabei sowohl als allgemeines Modell der Erntemaschine als auch als bezüglich einzelner Maschinenkomponenten als lokales Modell der Maschine eingerichtet. Die Neuronen der Ausgabeschicht erzeugen dann in diesem System die Signale für die Maschinenparameter.

Die Realisierung eines solchen Systems zur automatischen Einstellung einer selbstfahrenden Erntemaschine basierend auf einem neuronalen Netzwerk erfordert jedoch eine sehr große Rechenkapazität und schnelle Prozessoren. Außerdem ist ein großer Programmieraufwand notwendig. Diese Gründe und die damit verbundenen relativ hohen Kosten stehen einer Implementierung eines neuronalen Netzwerks in Erntemaschinen bisher entgegen.

Aufgabe der Erfindung ist es daher, ein kostengünstiges und einfach zu implementierendes System zu schaffen, das eine optimale Einstellung einer selbstfahrenden Erntemaschine ermöglicht.

Diese Aufgabe wird durch die Merkmale des Patentanspruches 1 gelöst. Die sich daran anschließenden Unteransprüche enthalten vorteilhafte Ausgestaltungen beziehungsweise Weiterbildungen der Erfindung.

Das erfindungsgemäße System weist mindestens ein Speichermittel zur Abspeicherung von Maschinenparametern für verschiedene Konstellationen der äußeren Erntebedingungen für den jeweiligen Ernteeinsatz auf. Dabei sind die abgespeicherten Maschinenparameter zur Einstellung der Erntemaschine aus dem Speichermittel abrufbar, nachdem dem System die jeweilige Konstellation der äußeren Erntebedingungen bekannt ist.

Um an die optimalen Werte für die abzuspeichernden Maschinenparameter zu gelangen, kann beispielsweise auf die Erfahrungswerte guter Bediener/Fahrer zurückgegriffen werden. Dabei wird ermittelt, welche Maschinenparameter von diesen bei bestimmten äußeren Erntebedingungen eingestellt wurden. Alternativ oder auch zusätzlich können die abzuspeichernden Maschinenparameter auch durch Meßreihen und aus bekannten Zusammenhängen generiert werden.

In einer besonderen Ausgestaltung der Erfindung wird das System durch eine Eingabemöglichkeit einer Zielvorgabe erweitert. Dadurch kann eine weitere Optimierung und Anpassung der Maschineneinstellung an den jeweiligen Bediener/Fahrer oder auch Kunden erreicht werden.

Das erfindungsgemäße System läßt sich auf einfache und kostengünstige Weise in Erntemaschinen implementieren, ohne daß die Zusammenhänge in der Erntemaschinen durch eine aufwendiges System wie beispielsweise durch ein neuronales Netzwerk programmäßig emuliert werden muß. Das erfindungsgemäße System kann auf der bereits in der Erntemaschinen vorhandenen elektronischen Hardwareplattform (z. B. das Elektronische-Bord-Informationssystem CEBIS der Fa. Claas) aufsetzen, während für die Implementierung beispielsweise eines neuronalen Netzwerkes eine wesentlich aufwendigere und teuere Computerhard- beziehungsweise -software notwendig ist.

Mit dem erfindungsgemäßen System wird sichergestellt, daß auch bei einem unerfahrenen Bediener/Fahrer eine optimale Einstellung der Erntemaschine gewährleistet und die Erntemaschine nicht durch eine fehlerhafte Einstellung weit unter ihrem Leistungsvermögen eingesetzt wird. Aber auch für den erfahrenen Bediener/Fahrer, der zu Beginn der Erntesaison etwas aus der Übung gekommen ist, ist das System sicherlich von Vorteil.

An Hand der beigefügten Zeichnungen soll die Erfindung nachfolgend verdeutlicht werden. Es zeigt:

Fig.1    eine schematische Darstellung eines Mähdreschers,

Fig.2    ein Blockdiagramm des erfindungsgemäßen Systems,

Fig.3    eine Darstellung einer im dem Speichermittel abgelegten Konfigurationstabelle mit den Maschinenparametern für verschiedene Konstellationen von äußeren Erntebedingungen und für jeweils verschiedene Zielvorgaben bezüglich des Ernteeinsatzes,

Fig.4    eine Verluste/Durchsatz-Kennline,

Fig. 5    ein Ablaufdiagramm zur erfindungsgemäßen Einstellung der Erntemaschine.

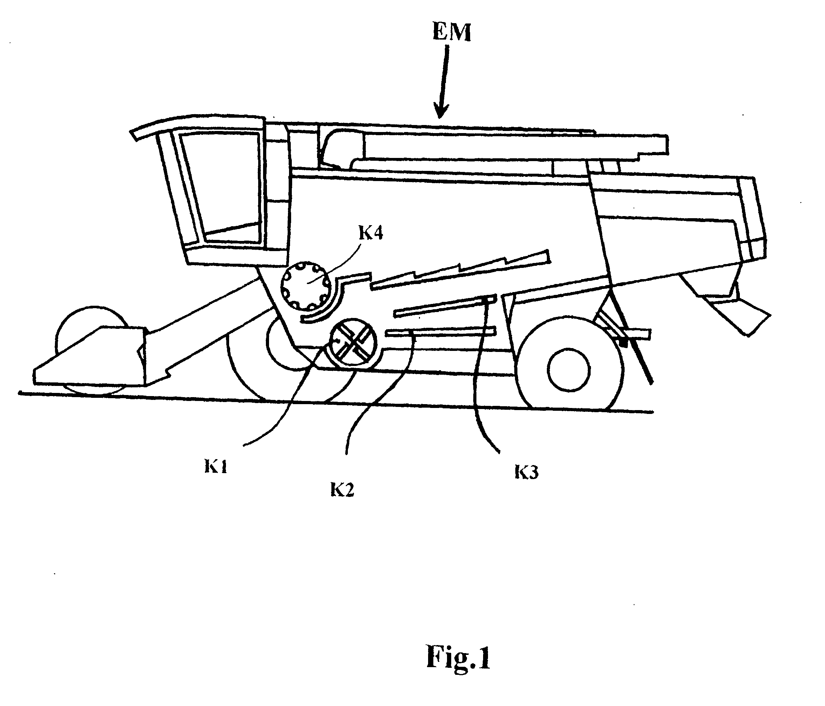

Figur 1 zeigt einen Mähdrescher (EM) mit verschiedenen einstellbaren Maschinenkomponenten. Aus Gründen der Übersicht sind nur einige Komponenten, das Reinigunsgebläse (K1), das Ober- und Untersieb (K2,K3) sowie die Dreschtrommel (K4) bezeichnet, deren Maschinenparameter (Gebläsedrehzahl, Siebweiten und Dreschtrommeldrehzahl) jeweils in Abhängigkeit unterschiedlicher äußerer Erntebedingungen einzustellen sind, um ein bestimmtes Ernteergebnis zu erzielen.

Dabei soll hier ausdrücklich darauf hingewiesen werden, daß das erfindungsgemäße System nicht auf die Einstellung dieser Maschinenkomponenten und auch nicht auf Mähdrescher beschränkt ist, sondern vielmehr für jede selbstfahrende Erntemaschine mit einstellbaren Maschinenparametern anwendbar ist.

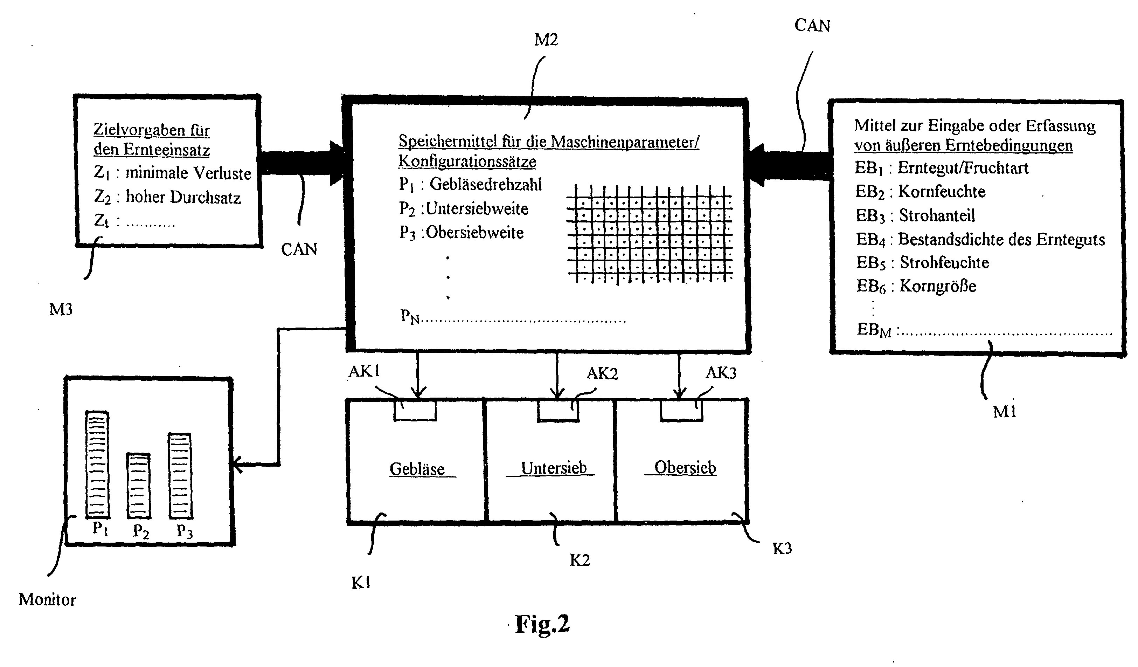

Figur 2 zeigt ein Blockdiagramm des erfindungsgemäßen Systems. Das Speichermittel (M2) für die Maschinenparameter ($P_1$, $P_2$, ..., $P_N$) kann ein bekanntes Speichermittel wie beispielsweise die Festplatte eines auf dem Mähdrescher angeordneten Computers, ein EPROM (Erasable Programmable Read Only Memory), ein EEPROM (Electrically Erasable Programmable Read Only Memory) oder eine Chipkarte sein. Bei Verwendung eines mobilen Speichermittels (M2), wie der Chipkarte, können Bediener/Fahrer die Konfigurationsdatensätze untereinander austauschen.

In einer weiteren Ausgestaltung der Erfindung werden die Erntemaschinen mit einem Datenfernübertragungssystem ausgestattet, über welches die Konfigurationsdatensätze beziehungsweise die Einstellungen der Erntemaschine, die Zielvorgabe und/oder die Erntebedingungen durch eine Fernabfrage überwacht, ausgetauscht oder verändert werden können.

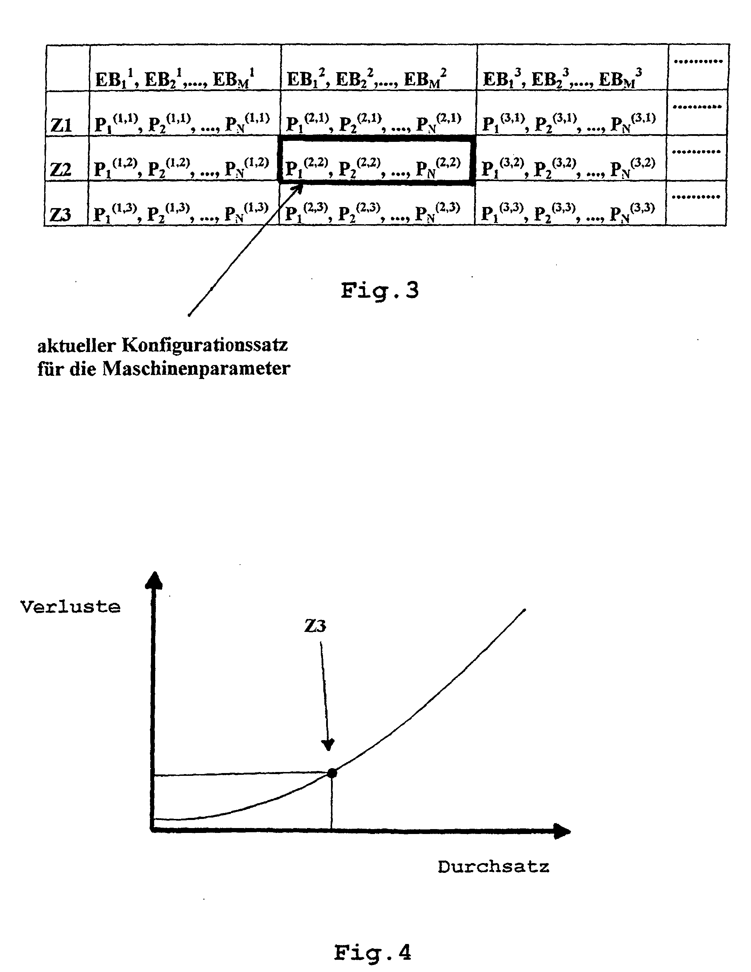

Vorzugsweise werden in einem Initialisierungsschritt Basis- Konfigurationssätze von Maschinenparametern ($P_1$, $P_2$, ..., $P_N$) für verschiedene Konstellationen von Erntebedingungen und gegebenenfalls von Zielvorgaben für den Ernteeinsatz in dem Speichermittel (M2) gespeichert ( vergleiche die Konfigurationstabelle in Fig.3 ). Dies kann zum Beispiel bereits schon vom Hersteller der Erntemaschine oder vom Bediener/ Fahrer selbst durchgeführt werden. Darüber hinaus ist es vorgesehen, die Konfigurationstabelle über die Basis-Konfigurationssätze hinaus um weitere Konfigurationssätze zu erweitern. Beispielhaft sind nachfolgend einige äußere Erntebedingungen und Zielvorgaben aufgeführt. Dabei sind in einer Ausführungsform die verschiedenen Erntebedingungen jeweils in bestimmte Kategorien (z.B. hoch, normal, niedrig) eingeteilt:

$$EB_1^1 = EB_1^2 = EB_1^3 = \text{Weizen}$$

$EB_2^1$ = hoher Strohanteil
$EB_2^2$ = normaler Strohanteil
$EB_2^3$ = niedriger Strohanteil

$EB_3^1$ = hohe Kornfeuchte
$EB_3^2$ = normale Kornfeuchte
$EB_3^3$ = niedrige Kornfeuchte

$EB_4 1$ = hohe Korngröße
$EB_4^2$ = mittlere Komgröße
$EB_4^3$ = niedrige Korngröße.

Diese Kategorien lassen sich wiederum in Unterkategorien, beispielsweise sehr hoch, extrem hoch, und weitere unterteilen.

Für die Zielvorgaben lassen sich ebenso bestimmte Kategorien angeben:

$Z_1$ = minimale Verluste
$Z_2$ = hoher Durchsatz
$Z_3$ = Kompromiß-Arbeitspunkt auf der Kennline (Verlust/Durchsatz)- vgl. Fig.4.

Da es sich in der Praxis herausgestellt hat, daß selbst erfahrene Bediener/Fahrer bei gleichen äußeren Erntebedingungen unterschiedliche Maschinenparameter wählen und dabei zu vergleichbar guten Ernteergebnissen gelangen; d.h. die Verknüpfung einer gegebenen Konstellation von äußeren Erntebedingungen bei einer bestimmten Zielvorgabe mit einem bestimmten Konfigurationssatz von Maschinenparametern nicht zwingend eindeutig ist, ist es vorgesehen, daß fiir eine bestimmte Konstellation von äußeren Erntebedingungen und für eine bestimmte Zielvorgabe durchaus zwei oder mehrere Konfigurationssätze für die Maschinenparametern abspeicherbar sind. Erfindungsgemäß kann dann ein Fahrer "seinen optimale Einstellung" so abspeichern, daß es jederzeit diese wieder als solche erkennt.

Damit wird der Tatsache Rechnung getragen, daß es aufgrund der Komplexität und der Wechselwirkungen der verschiedenen einstellbaren Maschinenkomponenten untereinander und für das Gesamternteergebnis - neben beliebig vielen Fehleinstellungen - durchaus mehrere optimale Einstellungen geben kann. Der Bediener/Fahrer kann dann ohne das Gefühl der Bevormundung zu haben, aus den abgespeicherten, optimalen Konfigurationssätzen seinen Favoriten auswählen, wobei in diesem Fall trotz der Wahlmöglichkeit Fehleinstellungen der Erntemaschine vermieden werden, worin ja die eigentliche Intention der Erfindung liegt.

Ein einzelnes Datenfeld $P_j^{(K,l)}$ in dem Speicher (M2) enthält mindestens einen Wert für einen bestimmten Maschinenparameter $P_N$ in Abhängigkeit von einer bestimmten Konstellation (k-Index) von äußeren Emtebedingungen und gegebenenfalls einer bestimmten Zielvorgabe (l-Index) für den Ernteeinsatz.

Die Eingabe der äußeren Erntebedingungen $(EB_1,EB_2,..,EB_M)$ erfolgt vorzugsweise menügesteuert über einen Bildschirm/Monitor und eine Tastatur. Das Mittel (M1) ist hier beispielsweise der Monitor und die Tastatur. Dabei ruft der Bediener/Fahrer den Menüpunkt "Eingabe der äußeren Erntebedingungen" auf Danach werden dem Bediener/Fahrer vom System Erntebedingungen/Kategorien von Erntebedingungen vorgeschlagen, wobei der Fahrer über die Tastatur die entsprechende Erntebedingung/Kategorie über seine Auswahl in das System eingibt:

EB1:    Fruchart = Weizen ?
           Fruchtart = Roggen ?
           Fruchtart = ....?
EB2:    hoher Strohanteil ?
           normaler Strohanteil ?
           niedriger Strohanteil
EB3:    .....

Alternativ zur manuellen Eingabe der äußeren Erntebedingungen und/oder als Ergänzung dazu ist es vorgesehen, daß die äußeren Erntebedingungen über Sensoren automatisch erfaßt werden. So kann der Bediener/Fahrer beispielsweise vor Beginn des Ernteeinsatzes die Fruchtart angeben, während andere äußere Erntebedingungen in einer kurzen "Konstellations-Findungsphase" über entsprechende Sensoren gemessen werden. Derartige Sensoren für die On-line Bestimmung beispielsweise des Strohanteiles oder der Kornfeuchte sind dem Fachmann bekannt. Die Mittel (M1) sind hier die Sensoren.

Die Eingabe der Zielvorgaben $(Z_1,Z_2,..,Z_l)$ für den Ernteeinsatz erfolgen ebenfalls menügesteuert über eine Tastatur oder beispielsweise einfach über einen Drehschalter.

In einer Ausgestaltung der Erfindung ist eine Gewichtung der einzelnen Zielvorgaben $(Z_1,Z_2,..,Z_l)$ vorgesehen. Es werden dadurch Kombinationen zwischen einzelnen Zielvorgaben möglich. Hiermit kann eine noch bessere Bediener/Fahrer- Anpassung erreicht und eine im Lohnbetrieb arbeitende Erntemaschine speziell auf Kundenwünsche eingestellt werden. Zwei unterschiedliche Kundenwünsche seien hier beispielsweise genannt. Eine Kunde legt viel Wert auf wenig Verluste und der nächste Kunde mehr Wert auf Flächenleistung. Durch eine Gewichtung der Zielvorgaben sind solche kundenspezifischen Anpassungen der Erntemaschine leicht durchführbar.
Besonders vorteilhaft erweist sich die Auswahlmöglichkeit einer gespeicherten, kundenspezifischen und/oder gewichteten Zielvorgabe.

In selbstfahrenden Erntemaschinen gibt es eine Bordinformationseinrichtung die Grundinformationen, wie beispielsweise Nummer und Typ der Erntemaschine, Fahrer beinhalten. Vielfach besteht mit Hilfe dieser Bordinformationseinrichtung auch die Möglichkeit einen Arbeitsauftrag, welcher auch den Namen des Kunden, die bearbeitete Fläche und die Fruchtart beinhaltet, abzuarbeiten. Dem Fahrer der Erntemaschine stehen daher zu Beginn einer Feldbearbeitung einige Informationen zur Auswahl einer Zielvorgabe beziehungsweise Erntebedingungen zur Verfügung.

In einer weitere Ausgestaltung der Erfindung werden diese vorhandenen maschinen - und auftragsspezifischen Informationen von dem erfindungsgemäßen System zur Auswahl einer Zielvorgabe $(Z_1,Z_2,..,Z_l)$ beziehungsweise Erntebedingung $(EB_1,EB_2,..,EB_M)$ verwendet.

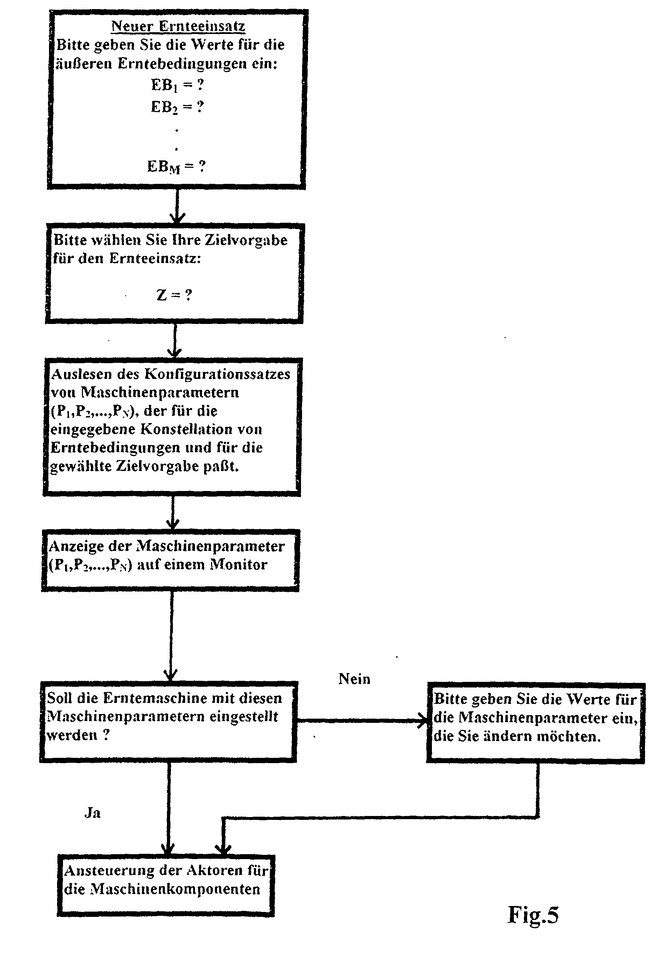

Nachdem dem System nunmehr die Konstellation der Erntebedingungen $(EB_1,EB_2,..,EB_M)$ und eine gegebenenfalls gewählten Zielvorgabe $(Z_1,Z_2,..,Z_l)$ bekannt ist, wird ein entsprechendes Datenfeld $P_j$ für die Maschinenparameter $(P_1,P_2,...,P_N)$ aus dem Speicher (M2) ausgelesen - siehe auch das Ablaufdiagramm in Fig.5. Vorzugsweise werden diese Maschinenparameter $(P_1,P_2,...,P_N)$ dem Bediener/Fahrer vor der Einstellung auf einem Monitor angezeigt. Dabei kann der Bediener/Fahrer entscheiden, ob er diese Einstellung akzeptiert und gegebenenfalls ein "Fein-Tuning" der vorgeschlagenen Maschinenparameter vornehmen. Auch eine Abspeicherung dieser individuell getrimmten Maschinenparameter als zusätzlicher Konfigurationssatz ist möglich, damit dieser für weitere Ernteeinsätze zur Verfügung steht.

Nachdem der Bediener/Fahrer den Konfigurationssatz akzeptiert hat, werden die abgerufenen Maschinenparameter $(P_1,P_2,...,P_N)$ entsprechenden Aktoren $(AK_1,AK_2,..,AK_N)$ als Steuersignale zur Einstellung der Maschinenkomponenten $(K_1,K_2,..,K_N)$ zugeführt.

Derartige Aktoren sind dem Fachmann bekannt.

Die ausgewählten Erntebedingungen beziehungsweise eingestellten Zielvorgaben sind keine konstanten Größen. So können sich die Erntebedingungen wie beispielsweise die Kornfeuchte auch innerhalb eines Feldstückes stark verändern. Schon die Änderung einer Erntebedingungen oder einer Zielvorgabe kann bewirken, daß das erfindungsgemäße System in der einfachsten Ausführung eine neue Maschineneinstellung vorschlägt. Diese wird dem Bediener/Fahrer auf einer bekannte Weise mitgeteilt. Es besteht dann die Möglichkeit die Maschineneinstellung zu ändern oder mit der momentanen Einstellung weiter zu arbeiten. In der weiteren Ausgestaltung wird diese neue vorgeschlagene Maschineneinstellung direkt in eine neue Maschineneinstellung überführt. Die Erntemaschine stellt sich so laufend auf die neuen Erntebedingungen beziehungsweise Zielvorgaben anhand der gespeicherten Werte ein.

Der Grad der Optimierung des Systems hängt überwiegend von der möglichen Speicherkapazität des Speichermittels(M2) ab. In der einfachsten Ausführung der Erfindung ist es daher so vorgesehen, daß alle Parameter wie Erntebedingung und/oder Zielvorgabe fest vorgegeben werden und nur anhand einer Eingabemaske ausgewählt werden können.

Werden dann in einer Ausgestaltung der Erfindung Erntebedingungen automatischen erfaßt, so werden die Meßwerte klassiert und dann dem System zugeführt. Dabei sind die Klassen so gewählt, daß fiir die jeweilige Klasse eine gespeicherte Zuordnung möglich ist.

In einer besonderen Ausgestaltung der Erfindung wird, wenn eine gewählter oder gemessener Wert einer Zielvorgabe oder Erntebedingung nicht zugeordnet werden kann, aus den gespeicherten Werte durch eine Interpolation oder einer bekannten Abhängigkeit eine Maschineneinstellung generiert.

Aus Sicherheitsgründen ist das System so ausgelegt, daß der Bediener/Fahrer jederzeit während eines Ernteeinsatzes in der Lage ist, einzelne oder alle eingestellte Maschinenparameter manuell zu übersteuern und gegebenenfalls abzuspeichern.

**Patentansprüche**

1. System zur Einstellung einer selbstfahrenden Erntemaschine (EM), die über eine oder mehrere Maschinenkomponenten ($K_1$, $K_2$, ..., $K_N$) mit jeweils einstellbaren Parametem ($P_1$, $P_2$,..., $P_N$) verfügt, unter Berücksichtigung von äußeren Erntebedingungen ($EB_1$, $EB_2$, ..., $EB_M$), wobei Mittel (M1) zur manuellen Eingabe und/oder automatischen Erfassung der äußeren Erntebedingungen ($EB_1$, $EB_2$, ..., $EB_M$) für den jeweiligen Ernteeinsatz vorgesehen sind,
**dadurch gekennzeichnet,**
**daß** mindestens ein Speichermittel (M2) vorgesehen ist zur Abspeicherung von mindestens einem Maschinenparameter ($P_1$,$P_2$,...,$P_N$) für verschiedene Konstellationen der äußeren Erntebedingungen ($EB_1$, $EB_2$, ..., $EB_M$) für den jeweiligen Ernteeinsatz und unter Berücksichtigung von mindestens einer abspeicherbaren Zielvorgabe ($Z_1$, $Z_2$, ..., $Z_N$) für den jeweiligen Ernteeinsatz, wobei die abgespeicherten Maschinenparameter ($P_1$, $P_2$, ..., $P_N$) und die mindestens eine Zielvorgabe ($Z_1$, $Z_2$, ... $Z_N$) zur Einstellung der Erntemaschine (EM) aus dem Speichermittel (M2) abrufbar sind, nachdem dem System die jeweilige Konstellation der äußeren Erntebedingungen ($EB_1$, $EB_2$, ..., $EB_M$) bekannt ist.

2. System nach Anspruch 1,
**dadurch gekennzeichnet,**
**daß** die jeweils aus dem Speichermittel (M2) abgerufenen Maschinenparneter ($P_1$,$P_2$,...,$P_N$) als Steuersignale über entsprechende Aktoren ($AK_1$, $AK_2$,..,$AK_N$) eine entsprechende Einstellung der Maschinenkomponenten ($K_1$,$K_2$,...,$K_N$) bewirken.

3. System nach mindestens einem der Ansprüche 1 oder 2,
**dadurch gekennzeichnet,**
**daß** aus den aus dem Speichermittel (M2) abgerufenen Maschinenparameter ($P_1$,$P_2$....,$P_N$) dem Bediener/Fahrer für eine Akzeptanzentscheidung zur Anzeige gebracht werden, und Mittel vorgesehen sind, mit denen der Bediener/Fahrer nach der Akzeptanzentscheidung bezüglich der vom System vorgeschlagenen Maschinenparameter ($P_1$,$P_2$,...$P_N$) die Einstellung der Maschinenkomponenten ($K_1$,$K_2$...,$K_N$) entsprechend der vorgeschlagenen Maschinenparameter ($P_1$,$P_2$,...,$P_N$) über Aktoren ($AK_1$,$AK_2$,..,$AK_N$) Aktoren auslösen oder unterbinden kann.

4. System nach einem oder mehreren der vorstehenden Ansprüche,
**dadurch gekennzeichnet,**
**daß** in einem Initialisierungsschritt in das Speichermittel (M2) Basis-Konfigurationsätze von Maschinenparametern abgespeichert werden.

5. System nach Anspruch 4,
**dadurch gekennzeichnet,**
**daß** in das Speichermittel (M2) weitere Konfigurationssätze von Maschinenparametern für eine Konstellation von äußeren Erntebedingungen und/oder einer Zielvorgabe abspeicherbar sind.

6. System nach einem oder mehreren der vorstehenden Ansprüche,
**dadurch gekennzeichnet,**
**daß** die gespeicherten Konfigurationssätze änderbar sind.

**7.** System nach einem oder mehreren der vorstehenden Ansprüche,
**dadurch gekennzeichnet,**
**daß** der Fahrer jederzeit auch während eines Ernteeinsatzes in der Lage ist, einzelne oder alle entsprechend eines Konfigurationssatzes eingestellte Maschinenparameter manuell zu übersteuern.

**8.** System nach einem oder mehreren der vorstehenden Ansprüche,
**dadurch gekennzeichnet,**
**daß** eine Zielvorgabe aus der Größe der Ernteverlusten, aus der Größe der Durchsatzleistung und/oder in der Einhaltung einer Kombination von Leistungsparametem durch die Verschiebung einer erntemaschinenspezifischen Kennlinie, beispielsweise einer Kennlinie für Verluste/Durchsatz, besteht.

**9.** System nach Anspruch 8,
**dadurch gekennzeichnet,**
**daß** die Zielvorgabe aus einzelnen Zielvorgaben abgeleitet werden kann und gegebenenfalls abspeicherbar ist.

**10.** System nach einem oder mehreren der vorstehenden Ansprüche,
**dadurch gekennzeichnet,**
**daß** die äußeren Erntebedingungen jeweils in bestimmte Kategorien, beispielsweise hoch, normal, niedrig und diese gegebenenfalls wiederum in Unterkategorien, beispielsweise sehr hoch, extrem hoch einstufbar sind.

**11.** System nach einem oder mehreren der vorstehenden Ansprüche,
**dadurch gekennzeichnet,**
**daß** die Zielvorgabe und/oder die Erntebedingungen aus vorhandenen maschinenund/oder auftragsspezifischen Informationen zumindest teilweise aus einer Bordinformationseinrichtung abgeleitet werden.

**12.** System nach einem oder mehreren der vorstehenden Ansprüche,
**dadurch gekennzeichnet, daß** die Maschinenparameter, wenn für diese Konstellation Erntebedingung/ Zielvorgabe keine gespeicherten Maschinenparameter vorhanden sind, aus gespeicherten Konfigurationssätze durch eine Interpolation entsprechender Maschinenparametern beziehungsweise aus gespeicherten Funktionen abgeleitet werden.

**13.** System nach einem oder mehreren der vorstehenden Ansprüche,
**dadurch gekennzeichnet,**
**daß** die im System gespeicherten Zielvorgaben, Erntebedingungen und/oder Konfigurationssätze mittels mobiler Speichermittel und/oder Datenfernübertragung überwacht, verändert und/oder ausgetauscht werden können.

## Claims

**1.** A system for adjusting a self-propelled harvester (EM) which has one or more machine components ($K_1$, $K_2$, ..., $K_N$) with respective adjustable parameters ($P_1$, $P_2$, ...,$P_N$), having regard to external harvesting conditions ($EB_1$, $EB_2$, ..., $EB_M$), wherein there are provided means (M1) for manually inputting and/or automatically detecting the external harvesting conditions ($EB_1$, $EB_2$,..., $EB_M$) for the respective harvesting operation, **characterised in that** there is provided at least one storage means (M2) for storage of at least one machine parameter ($P_1$, $P_2$,..., $P_N$) for various combinations of the external harvesting conditions ($EB_1$, $EB_2$, ..., $EB_M$) for the respective harvesting operation and having regard to at least one storable target presetting ($Z_1$, $Z_2$, ..., $Z_N$) for the respective harvesting operation, wherein the stored machine parameters ($P_1$, $P_2$,..., $P_N$) and the at least one target presetting ($Z_1$, $Z_2$, ..., $Z_N$) can be called up out of the storage means (M2) for adjusting the harvester (EM) after the respective combination of the external harvesting conditions ($EB_1$, $EB_2$, ..., $EB_M$) is known to the system.

**2.** A system according to claim 1 **characterised in that** the machine parameters ($P_1$, $P_2$, ,..., $P_N$) which are respectively called up out of the storage means (M2) as control signals by way of suitable actuators ($AK_1$, $AK_2$, ..., $AK_N$) produce a corresponding adjustment of the machine components ($K_1$, $K_2$, ..., $K_N$).

**3.** A system according to at least one of claims 1 and 2 **characterised in that** machine parameters ($P_1$, $P_2$, ..., $P_N$) which are called up out of the storage means (M2) are displayed to the operator/driver for an acceptance decision, and there are provided means with which the operator/driver in accordance with the acceptance decision in respect of the machine parameters ($P_1$, $P_2$, ..., $P_N$) proposed by the system can initiate or prevent adjustment of the machine components ($K_1$, $K_z$,..., $K_N$) in accordance with the proposed machine parameters ($P_1$, $P_2$,..., $P_N$) by way of actuators ($AK_1$, $AK_2$, ..., $AK_N$).

**4.** A system according to one or more of the preceding claims **characterised in that** in an initialisation step base configuration sets of machine parameters are stored in the storage means (M2).

**5.** A system according to claim 4 **characterised in that** further configuration sets of machine parameters for a combination of external harvesting conditions and/or target presetting can be stored in the storage means (M2).

6. A system according to one or more of the preceding claims **characterised in that** the stored configuration sets can be modified.

7. A system according to one or more of the preceding claims **characterised in that** the driver is also in a position at any time during a harvesting operation to manually override individual or all machine parameters which are adjusted in accordance with a configuration set.

8. A system according to one or more of the preceding claims **characterised in that** a target presetting comprises the magnitude of the harvesting losses, the magnitude of the throughput capacity and/or involves maintaining a combination of capacity parameters by displacement of a harvester-specific characteristic, for example a characteristic in respect of losses/throughput.

9. A system according to claim 8 **characterised in that** the target presetting can be derived from individual target presettings and can possibly be stored.

10. A system according to one or more of the preceding claims **characterised in that** the external harvesting conditions can be respectively classified in given categories, for example high, normal and low and they can possibly in turn be classified in sub-categories, for example very high and extremely high.

11. A system according to one or more of the preceding claims **characterised in that** the target presetting and/or the harvesting conditions are derived from existing machine-specific and/or task-specific information at least in part from an on-board information device.

12. A system according to one or more of the preceding claims **characterised in that** the machine parameters, if no stored machine parameters are present for that combination of harvesting condition/target presetting, are derived from stored configuration sets by interpolation of corresponding machine parameters or from stored functions.

13. A system according to one or more of the preceding claims **characterised in that** the target presettings, harvesting conditions and/or configuration sets stored in the system can be monitored, modified and/or replaced by means of mobile storage means and/or remote data transmission.

**Revendications**

1. Système de réglage d'une machine de récolte (EM) automotrice qui dispose d'un ou de plusieurs composants de machine ($K_1$, $K_2$,...$K_N$) avec des paramètres ($P_1$, $P_2$,...$P_N$) réglables en tenant compte de conditions de récolte ($EB_1$, $EB_2$...$EB_M$) extérieures, des moyens (M1) étant prévus pour l'entrée manuelle et/ou la détection automatique des conditions de récolte ($EB_1$, $EB_2$,...$EB_M$) extérieures pour la récolte concernée,
**caractérisé en ce**
**qu'**il est prévu au moins un moyen de mémoire (M2) pour mémoriser au moins un paramètre machine ($P_1$, $P_2$,...$P_N$) pour différentes combinaisons des conditions de récolte ($EB_1$, $EB_2$,...$EB_M$) extérieures pour la récolte concernée, en tenant compte d'au moins un objectif ($Z_1$, $Z_2$,...$Z_N$) mémorisable pour la récolte concernée, les paramètres machine ($P_1$, $P_2$,...$P_N$) mémorisés et l'objectif ($Z_1$, $Z_2$,...$Z_N$) au nombre d'au moins un, pouvant être lus dans le moyen de mémoire (M2) pour le réglage de la machine de récolte dès que la combinaison des conditions de récolte ($EB_1$, $EB_2$,...$EB_M$) extérieures est connue du système.

2. Système selon la revendication 1, **caractérisé en ce que** les paramètres machine ($P_1$, $P_2$,...$P_N$) lus dans le moyen de mémoire (M2), en tant que signaux de commande, provoquent, par l'intermédiaire d'acteurs ($AK_1$, $AK_2$,... $AK_N$), un réglage correspondant des composants de machine ($K_1$, $K_2$,...$K_N$).

3. Système selon au moins une des revendications 1 ou 2, **caractérisé en ce que** des paramètres machine ($P_1$, $P_2$....$P_N$) lus dans le moyen de mémoire (M2) sont affichés à l'attention de l'utilisateur/conducteur à des fins de validation et que des moyens sont prévus à l'aide desquels l'utilisateur/conducteur après la validation des paramètres machine ($P_1$, $P_2$....$P_N$) proposés par le système peut déclencher ou inhiber le réglage des composants ($K_1$, $K_2$,...$K_N$), par l'intermédiaire d'acteurs ($AK_1$, $AK_2$,... $AK_N$) en fonction des paramètres machine ($P_1$, $P_2$,...$P_N$) proposés.

4. Système selon une ou plusieurs des revendications précédentes, **caractérisé en ce qu'**au cours d'une étape d'initialisation des jeux de configurations de base de paramètres machine ($P_1$, $P_2$,...$P_N$) sont inscrits dans le moyen de mémoire (M2).

5. Système selon la revendication 4, **caractérisé en ce que** des jeux de configurations de paramètres machine ($P_1$, $P_2$,...$P_N$) supplémentaires pour une combinaison de conditions de récolte extérieures et/ou un objectif peuvent être inscrits dans le moyen de mémoire (M2).

**6.** Système selon une ou plusieurs des revendications précédentes, **caractérisé en ce que** les jeux de configurations mémorisés peuvent être modifiés.

**7.** Système selon une ou plusieurs des revendications précédentes, **caractérisé en ce que** le conducteur, à tout instant pendant une opération de récolte, a la possibilité de modifier manuellement des paramètres machine individuels ou tous les paramètres machine réglés d'un jeu de configurations.

**8.** Système selon une ou plusieurs des revendications précédentes, **caractérisé en ce qu'**un objectif se compose de la valeur des pertes de récolte, de la valeur du rendement et/ou du respect d'une combinaison de paramètres de rendement par le décalage d'une courbe caractéristique spécifique de la machine de récolte, par exemple d'une courbe caractéristiques les pertes/le rendement.

**9.** Système selon la revendication 8, **caractérisé en ce que** l'objectif peut être dérivé à partir de différents objectifs particuliers et le cas échéant mémorisé.

**10.** Système selon une ou plusieurs des revendications précédentes, **caractérisé en ce que** les conditions de récolte extérieures peuvent être classées en des catégories déterminées, par exemple élevé, normal, faible et ces catégories peuvent être subdivisées en sous-catégories, par exemple très élevé, extrêmement élevé.

**11.** Système selon une ou plusieurs des revendications précédentes, **caractérisé en ce que** l'objectif et/ou les conditions de récolte sont dérivées d'informations existantes spécifiques de la machine et/ou du travail au moins partiellement présentes dans un système d'information embarqué.

**12.** Système selon une ou plusieurs des revendications précédentes, **caractérisé en ce que** les paramètres machine, lorsqu'il n'existe pas paramètres machine mémorisés pour la combinaison présente des conditions de récolte/objectif, sont dérivés de jeux de configurations mémorisés par interpolation de paramètres machine correspondants, voire de fonctions mémorisées.

**13.** Système selon une ou plusieurs des revendications précédentes, **caractérisé en ce que** les objectifs, les conditions de récolte et/ou les jeux de configurations mémorisés peuvent être surveillés, modifiés et/ou remplacés à l'aide de moyens de mémoire mobiles et/ou par télé-transfert de données.

EM

K4

K1

K2

K3

Fig.1

EP 0 928 554 B1

M2

CAN

Zielvorgaben für
den Ernteeinsatz

$Z_1$ : minimale Verluste

$Z_2$ : hoher Durchsatz

$Z_t$ : ...........

CAN

M3

Speichermittel für die Maschinenparameter/
Konfigurationssätze

$P_1$ : Gebläsedrehzahl

$P_2$ :Untersiebweite

$P_3$ :Obersiebweite

.
.
.

$P_N$..............

Mittel zur Eingabe oder Erfassung
von äußeren Erntebedingungen

$EB_1$ : Erntegut/Fruchtart

$EB_2$ : Kornfeuchte

$EB_3$ : Strohanteil

$EB_4$ : Bestandsdichte des Ernteguts

$EB_5$ : Strohfeuchte

$EB_6$ : Korngröße

$EB_M$ :...............................

M1

AK1     AK2     AK3

Gebläse     Untersieb     Obersieb

K1     K2     K3

$P_1$     $P_2$     $P_3$

Monitor

**Fig.2**

| | $EB_1^{\,1}, EB_2^{\,1}, ..., EB_M^{\,1}$ | $EB_1^{\,2}, EB_2^{\,2}, ..., EB_M^{\,2}$ | $EB_1^{\,3}, EB_2^{\,3}, ..., EB_M^{\,3}$ | ........... |
|---|---|---|---|---|
| Z1 | $P_1^{(1,1)}, P_2^{(1,1)}, ..., P_N^{(1,1)}$ | $P_1^{(2,1)}, P_2^{(2,1)}, ..., P_N^{(2,1)}$ | $P_1^{(3,1)}, P_2^{(3,1)}, ..., P_N^{(3,1)}$ | ........... |
| Z2 | $P_1^{(1,2)}, P_2^{(1,2)}, ..., P_N^{(1,2)}$ | $P_1^{(2,2)}, P_2^{(2,2)}, ..., P_N^{(2,2)}$ | $P_1^{(3,2)}, P_2^{(3,2)}, ..., P_N^{(3,2)}$ | ........... |
| Z3 | $P_1^{(1,3)}, P_2^{(1,3)}, ..., P_N^{(1,3)}$ | $P_1^{(2,3)}, P_2^{(2,3)}, ..., P_N^{(2,3)}$ | $P_1^{(3,3)}, P_2^{(3,3)}, ..., P_N^{(3,3)}$ | ........... |

Fig.3

aktueller Konfigurationssatz
für die Maschinenparameter

Fig.4

Neuer Ernteeinsatz
Bitte geben Sie die Werte für die
äußeren Erntebedingungen ein:

$$EB_1 = ?$$
$$EB_2 = ?$$
.
.
$$EB_M = ?$$

↓

Bitte wählen Sie Ihre Zielvorgabe
für den Ernteeinsatz:

$$Z = ?$$

↓

Auslesen des Konfigurationssatzes
von Maschinenparametern
$(P_1, P_2, ..., P_N)$, der für die
eingegebene Konstellation von
Erntebedingungen und für die
gewählte Zielvorgabe paßt.

↓

Anzeige der Maschinenparameter
$(P_1, P_2, ..., P_N)$ auf einem Monitor

↓

Nein

Soll die Erntemaschine mit diesen
Maschinenparametern eingestellt
werden ?  →  Bitte geben Sie die Werte für
die Maschinenparameter ein,
die Sie ändern möchten.

Ja

Ansteuerung der Aktoren für
die Maschinenkomponenten

Fig.5